# EUROPÄISCHE PATENTSCHRIFT

(11) **EP 3 175 208 B1**
(45) Veröffentlichungstag und Bekanntmachung des Hinweises auf die Patenterteilung: **09.05.2018**
(21) Anmeldenummer: 14745165.2
(22) Anmeldetag: 01.08.2014
(51) Int. Cl.: G01L 19/14, G01L 19/00

(54) **DRUCKMESSANORDNUNG UND VERFAHREN ZUR HERSTELLUNG DIESER DRUCKMESSANORDNUNG**
PRESSURE MEASURING ARRANGEMENT AND METHOD FOR PRODUCING SAID PRESSURE MEASURING ARRANGMENT
SYSTÈME DE MESURE DE PRESSION ET PROCÉDÉ DE FABRICATION D'UN SYSTÈME DE MESURE DE PRESSION

(43) Veröffentlichungstag der Anmeldung: 07.06.2017
(73) Patentinhaber: VEGA Grieshaber KG, 77709 Wolfach (DE)
(72) Erfinder: KOPP, Thomas, 77709 Wolfach (DE)
(74) Vertreter: Westphal, Mussgnug & Partner Patentanwälte mbB
(86) Internationale Anmeldenummer: PCT/EP2014/066632
(87) Internationale Veröffentlichungsnummer: WO 2016/015781

(56) Entgegenhaltungen:
- EP-A1- 2 395 336
- EP-A2- 1 167 938
- EP-A2- 1 174 696
- WO-A1-93/22646
- WO-A1-2005/012865
- WO-A1-2007/019714
- WO-A1-2008/058406
- DE-A1- 19 628 551

## Beschreibung

Die vorliegende Erfindung betrifft eine Druckmessanordnung gemäß dem Oberbegriff des Patentanspruchs 1 sowie ein Verfahren zur Herstellung dieser Druckmessanordnung.

Aus dem Stand der Technik sind verschiedene Druckmessanordnungen mit einer in einem Gehäuse angeordneten keramischen Druckmesszelle und einem in Axialrichtung und zum Prozess hin angeordneten keramischen Prozessanschluss bekannt. Bei den aus dem Stand der Technik bekannten Druckmessanordnungen werden üblicherweise metallische oder keramische Druckmesszellen eingesetzt, die zum Prozessanschluss hin mittels einer Elastomerdichtung abgedichtet sind. Bei keramischen Druckmesszellen ist eine Abdichtung mit Elastomerdichtungen bislang die einzige Möglichkeit, um einen mechanischen spannungsfreien Einbau zu gewährleisten. An der Verwendung von Elastomerdichtungen wird es jedoch als nachteilig empfunden, dass diese nicht diffusionsdicht sind. Beispielsweise organische Lösungsmittel oder Gase diffundieren mit der Zeit durch die verwendete Elastomerdichtung und dringen in einen Innenraum der Druckmessanordnung, wo beispielsweise eine Umwandlungselektronik sitzt oder eine Druckausgleichsöffnung zur Relativdruckmessung angeordnet ist, ein und können somit zu Messwertveränderungen oder Korrosion beispielsweise der Sensorelektronik führen.

Aus EP 2 395 336 A1 sind Sensorvorrichtungen bekannt mit einem kapazitiven Drucksensorelement und einem Prozessanschluss. Der Prozessanschluss umgibt das Sensorelement in Radialrichtung, wobei beide Elemente durch einen Dichtungsring aus Glas miteinander verbunden sind. Bekannt sind auch Drucksensoren mit einer Membran und einem Gehäuseteil, die mittels einem Glaslot miteinander verbunden ist, zum Beispiel aus WO 2008/058406 A1, WO 2007/019714 A1 oder EP 1 167 938 A2.
Es ist die Aufgabe der vorliegenden Erfindung, bekannte Druckmessanordnungen derart weiterzubilden, dass die aus dem Stand der Technik bekannten Nachteile vermieden werden.

Diese Aufgabe wird durch eine Druckmessanordnung mit dem Merkmal des Patentanspruchs 1 gelöst. Ein Verfahren zur Herstellung einer solchen Druckmessanordnung ist in Patentanspruch 13 angegeben. Vorteilhafte Weiterbildungen sind in abhängigen Patentansprüchen wiedergegeben.

Eine erfindungsgemäße Druckmessanordnung mit einer angeordneten keramischen Druckmesszelle und einem in Axialrichtung und zum Prozess hin angeordneten keramischen Prozessanschluss, wobei die Druckmesszelle mit dem Prozessanschluss eine stoffschlüssige Verbindung aufweist, zeichnet sich dadurch aus, dass die Druckmesszelle in einem Gehäuse angeordnet ist, wobei die Druckmessanordnung eine Stützanordnung aufweist, die derart ausgebildet ist, dass sie wenigstens in Axialrichtung wirkende, durch das Messmedium induzierte Druckkräfte auf die Verbindung zwischen Druckmesszelle und Prozessanschluss aufnimmt, wobei die Stützanordnung einen Fixierring aufweist, der den Prozessanschluss in Radialrichtung übergreift und mit dem Gehäuse kraftschlüssig verbunden ist, wobei eine Anordnung aus der Druckmesszelle und dem Prozessanschluss in Richtung des Gehäuses gegen eine in dem Gehäuse verlaufende Stufe gespannt und damit unter Vorspannung gehaltert werden.

Durch das Vorsehen einer stoffschlüssigen und insbesondere diffusionsdichten Verbindung zwischen der Druckmesszelle und dem Prozessanschluss wird gewährleistet, dass eine Diffusion von dem zu messenden Medium, insbesondere gasförmigen oder leicht flüchtigen Medien, durch die Verbindungsstelle zwischen der Druckmesszelle und dem Prozessanschluss verhindert wird und damit eine diffusions- und druckdichte Verbindung geschaffen wird.

Als stoffschlüssige Verbindungen werden im Sinne der vorliegenden Anmeldung insbesondere Lot-, Schweiß- und Klebeverbindungen verstanden. Der Prozessanschluss ist vorzugsweise rohrförmig ausgebildet und erstreckt sich von der Druckmesszelle ausgehend weg.

Mit der Stützeinrichtung wird eine erhöhte Stabilität der gesamten Druckmessanordnung erreicht und insbesondere ein Einsatz der Druckmessanordnung bei höheren Drücken ermöglicht. Vorteilhafterweise ist die Verbindung zwischen der Druckmesszelle und dem Prozessanschluss mittels eines Glaslots oder einer Glasfritte hergestellt. Die vorgenannten Verbindungstechniken sind im Stand der Technik gut erprobt und insbesondere druck- und diffusionsdicht, so dass diese Verbindungstechniken die oben beschriebenen Anforderungen hervorragend erfüllen. Ferner wird auf diese Weise erreicht, dass die Stützkonstruktion nicht in Mediumkontakt kommt und daher auch aus günstigeren Materialien gefertigt sein kann.

Insbesondere bei diesen Verbindungstechniken ist es vorteilhaft, wenn eine Stützkonstruktion vorgesehen wird, die auf die Verbindung zwischen Druckmesszelle und Prozessanschluss wirkende Zugspannungen aufnimmt. Vorteilhaft ist es, wenn die Stützkonstruktion derart ausgebildet ist, dass auch Scherspannungen, Kippmomente und Drehmomente im Bereich der Verbindung aufgenommen werden.

Eine besonders einfache und kompakte Ausgestaltung kann erreicht werden, wenn der Prozessanschluss vorderseitig an einer Messmembran der Druckmesszelle angeordnet ist. Durch eine derartige Anordnung kann insbesondere erreicht werden, dass von einem Medium druckinduzierten Kräfte zwischen Druckmesszelle und Prozessanschluss hauptsächlich in Axialrichtung wirken, in der sie aber sehr gut durch die Stützkonstruktion aufgenommen werden können.

Ohne Verwendung einer Stützkonstruktion ist die vorliegende Anordnung bis zu Drücken von ca. 25 bar einsetzbar, wobei durch die Verwendung der Stützkonstruktion der Einsatzbereich der vorliegenden Druckmessanordnung auf Drücke bis zu wenigstens 100 bar vergrößert werden kann.

In einer Ausführungsform der vorliegenden Erfindung kann der Prozessanschluss an einem druckmesszellenseitigen Ende in Radialrichtung einen umlaufenden Kragen aufweisen, an dem die Stützkonstruktion zur Aufnahme der in Axialrichtung wirkenden Kräfte angreifen kann.

Da die Stützanordnung mit einem Fixierring ausgestaltet ist, der den Prozessanschluss übergreift, beispielsweise im Bereich des Kragens, und der mit dem Gehäuse kraftschlüssig verbunden ist, können in Axialrichtung wirkende Kräfte über den Fixierring auf das Gehäuse übertragen werden. Eine kraftschlüssige Verbindung zwischen dem Fixierring und dem Gehäuse kann beispielsweise durch Verschrauben, Verschweißen, Verstemmen oder ein Aufschrumpfen des Fixierrings auf das Gehäuse erreicht werden.

Eine besonders einfache Ausgestaltung kann erreicht werden, wenn der Fixierring als Überwurfmutter ausgebildet ist, die mit dem Gehäuse verschraubt ist. Eine solche Überwurfmutter kann beispielsweise den mit einem Kragen ausgestalteten Prozessanschluss übergreifen und dadurch sicher mit dem Gehäuse verbinden.

Vorteilhafterweise weist die Überwurfmutter ein Außengewinde auf, das in korrespondierend dazu ausgebildetes Innengewinde des Gehäuses eingreift. Durch eine derartige Schraubverbindung kann besonders einfach erreicht werden, dass die Anordnung aus Druckmesszelle und Prozessanschluss mit dem Gehäuse verspannt wird, d. h. dass eine den Prozessanschluss und die Druckmesszelle aneinander pressende Kraft aufgebaut wird. Erfindungsgemäß ist die Anordnung aus Druckmesszelle und Prozessanschluss unter einer Vorspannung in dem Gehäuse und der Stützanordnung angeordnet, da auf diese Weise effektiv auf die Verbindung zwischen Druckmesszelle und Prozessanschluss wirkende Kräfte, insbesondere in Axialrichtung kompensiert werden können. Ferner ist durch eine Schraubverbindung eine variable Vorspannung einstellbar.

Zwischen dem Fixierring und dem Prozessanschluss kann ferner ein Ausgleichselement angeordnet sein.

Durch die Verwendung eines derartigen Ausgleichselements können beispielsweise Längentoleranzen bei der Herstellung der Druckmessanordnung ausgeglichen werden, insbesondere ist es aber möglich, unterschiedliche thermische Ausdehnungskoeffizienten von keramischen und metallischen Teilen der Druckmessanordnung zu kompensieren. Werden beispielsweise das Gehäuse und die Stützanordnung aus einem Edelstahl hergestellt und die Druckmesszelle und der Prozessanschluss aus Keramik, beispielsweise Aluminiumoxid, gefertigt, so weisen diese unterschiedliche thermische Ausdehnungskoeffizienten auf.

Auf Grund der unterschiedlichen Ausdehnungskoeffizienten werden sich die verwendeten Komponenten insbesondere in Axialrichtung unterschiedlich ausdehnen, so dass die vorteilhafterweise vorgesehene Vorspannung variieren und in einem besonders ungünstigen Fall auch vollständig aufgehoben werden kann. In diesem Fall ist es besonders günstig, wenn das Ausgleichselement geeignet dimensioniert ist und einen thermischen Ausdehnungskoeffizienten aufweist, der derart an einen thermischen Ausdehnungskoeffizienten der Stützanordnung und/oder des Gehäuses und der Druckmesszelle angepasst ist, dass zumindest unterschiedliche thermisch induzierte Ausdehnungen in Axialrichtung kompensiert werden. Bei den vorgenannten Materialien kann dies beispielsweise dadurch erreicht werden, dass als Ausgleichselement ein zwischen dem Fixierring und dem Prozessanschluss angeordneter Ring aus beispielsweise Zink oder Aluminium vorgesehen ist. Das Material für das Ausgleichselement, das beispielsweise als umlaufender Ring ausgebildet sein kann, ist derart auszuwählen, dass thermisch induzierte Längsausdehnungen von Gehäuse und/oder Stützanordnung und Druckmesszelle und Prozessanschluss aneinander angepasst sind.

In dem Gehäuse der Druckmessanordnung ist vorteilhafterweise ein bevorzugt metallischer Aufnahmering angeordnet, der die Druckmesszelle in rückseitige Richtung abstützt und beispielsweise eine Umwandlungselektronik tragen kann. Durch einen derartigen Aufnahmering kann ein Elektronikgehäuse für unmittelbar der Druckmesszelle zugeordnete Elektronikkomponenten geschaffen werden, das beispielsweise rückseitig durch eine Abschlussleiterplatte, die elektrische Anschlüsse der Druckmesszelle zur Verfügung stellt, abgeschlossen sein kann. Auf diese Weise wird eine separat handhabbare Einheit geschaffen, die aus der Druckmesszelle, der Umwandlungselektronik, die beispielsweise eine Analog-Digital-Wandlung gewährleisten kann, und aus standardisierten elektrischen Anschlüssen besteht und in dem Gehäuse angeordnet werden kann.

In einer besonders geschickten Ausgestaltungsform weist die Verbindung zwischen der Druckmesszelle und dem Prozessanschluss in Radialrichtung eine erste Ausdehnung auf, die kleiner oder gleich einer zweiten Ausdehnung einer Verbindung zwischen einem Grundkörper der Druckmesszelle und der Messmembran ist. Bei keramischen Druckmesszellen, insbesondere kapazitivarbeitenden keramischen Druckmesszellen, ist die Messmembran über eine umlaufende Fügung mittels eines Glaslots oder einer Glasfritte an dem Grundkörper der Druckmesszelle fixiert. Wenn die Verbindung zwischen Prozessanschluss und Druckmesszelle ebenfalls umlaufend und mit einer Ausdehnung erfolgt, die kleiner oder gleich der Ausdehnung der Verbindung zwischen der Messmembran und dem Grundkörper ist, so sind keine oder nur geringe Beeinflussungen des Messverhaltens der Druckmesszelle zu erwarten.

Eine besonders einfache Herstellung der vorliegenden Druckmessanordnung kann erreicht werden, wenn der Prozessanschluss mittels eines Keramikspritzgussverfahrens hergestellt ist. Durch ein derartiges Keramikspritzgussverfahren lassen sich die komplexen Geometrien eines derartigen Prozessanschlusses, beispielsweise umlaufende Kragen, Hinterschnitte und/oder Gewinde günstig und mit großer Genauigkeit herstellen, so dass hier eine kostengünstige Teilproduktion möglich ist.

Ein erfindungsgemäßes Verfahren zur Herstellung der zuvor beschriebenen Druckmessanordnung weist folgende Schritte auf:
- Bereitstellen einer keramischen Druckmesszelle,
- Bereitstellen eines bevorzugt rohrförmig ausgebildeten keramischen Prozessanschlusses,
- stoffschlüssiges Verbinden der Druckmesszelle und des Prozessanschlusses und
- Anordnen der Druckmesszelle in einem Gehäuse.

In einer bevorzugten Weiterbildung des Verfahrens wird zusätzlich eine Stützanordnung derart angebracht, dass wenigstens in Axialrichtung wirkende Kräfte zwischen der Druckmesszelle und dem Prozessanschluss von der Stützeinrichtung aufgenommen werden.

Die vorliegende Erfindung wird nachfolgend unter Bezugnahme auf die beigefügten Figuren eingehend erläutert. Es zeigen:
- Figur 1: eine Schnittdarstellung einer erfindungsgemäßen Druckmessanordnung und
- Figur 2: eine Ausschnittsvergrößerung aus Figur 1.

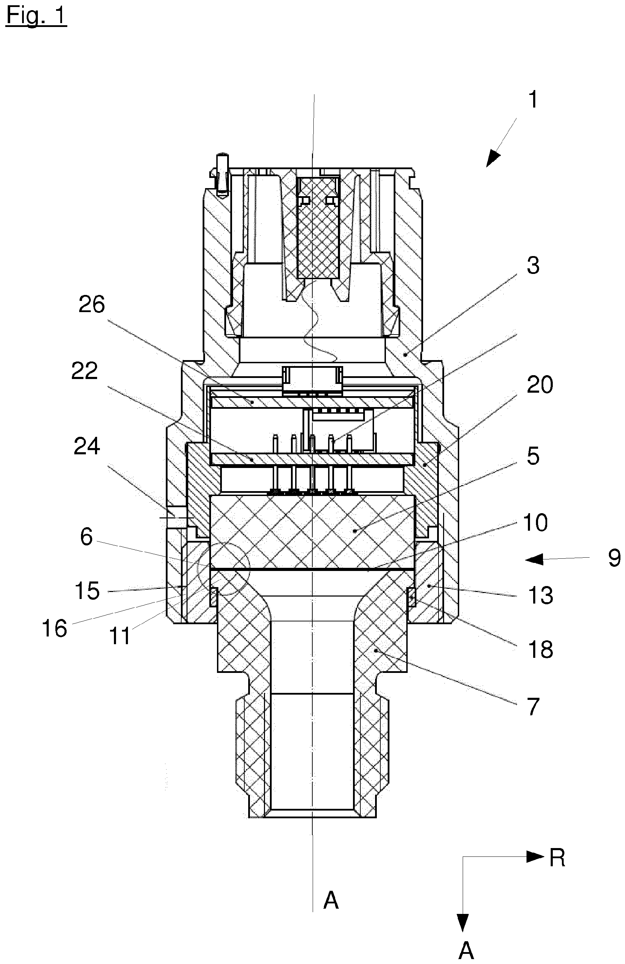

Figur 1 zeigt eine Schnittdarstellung einer Druckmessanordnung 1 mit einer in einem im Wesentlichen rohrförmig ausgestalteten Gehäuse 3 angeordneten keramischen Druckmesszelle 5. Die keramische Druckmesszelle 5 ist über eine Verbindung 6 stoffschlüssig mit einem Prozessanschluss 7 verbunden, der in Axialrichtung A vorderseitig zu der Druckmesszelle 5 angeordnet ist. Der Prozessanschluss 7 sitzt vorderseitig auf der Druckmesszelle 5 auf und ist umlaufend mit einer Verbindung 6, beispielsweise einer Fügung, mittels eines Glaslotes oder einer Glasfritte mit der Druckmesszelle 5, vorliegend deren Messmembran 10, verbunden.

Die Druckmesszelle 5 ist in dem Gehäuse 3 rückseitig über einen Aufnahmering 20 gelagert, wobei der Aufnahmering 20 die Druckmesszelle 5 über eine innenseitig umlaufende Stufe in Axialrichtung A abstützt. Rückseitig der Druckmesszelle 5 ist eine Umwandlungselektronik 22 angeordnet, die beispielsweise eine Analog-Digital-Wandlung der von der Druckmesszelle 5 abgegebenen analogen Signale vornimmt und ausgangsseitig zur Verfügung stellt. An dem Aufnahmering 20 ist ferner rückseitig eine Verschlussleiterplatte 26 angeordnet, die beispielsweise einen elektrischen Steckerkontakt zur rückseitigen Kontaktierung der Anordnung aufweisen kann. Die Verschlussleiterplatte 26 kann ferner beispielsweise mittels eines Lötzinns an dem Aufnahmering 20 umlaufend befestigt sein und damit die Anordnung rückseitig verschließen.

Der vorderseitig angeordnete Prozessanschluss 7 ist mit der Druckmesszelle 5 stirnseitig umlaufend über die Verbindung 6 verglast und damit druck- und diffusionsdicht verbunden.

Der Prozessanschluss 7 weist an seinem druckmesszellenseitigen Ende einen umlaufenden Kragen 11 auf, der einen Außendurchmesser entsprechend einem Außendurchmesser der Druckmesszelle 5 aufweist, wobei sich der Prozessanschluss 7 ausgehend von dem Kragen 11 in Axialrichtung A in einer Stufe verjungt. In Axialrichtung A vor dieser Stufe gesehen und mit einem zu dem Kragen 11 korrespondierenden Außendurchmesser ist ein Ausgleichselement 18, das vorliegend als umlaufender Ring ausgebildet ist, angeordnet. Das Ausgleichselement 18 dient in der vorliegenden Anordnung dazu, durch Temperatureinwirkung verursachte unterschiedliche thermische Ausdehnungen der verwendeten Materialen zu kompensieren.

Der Prozessanschluss 7 ist mittels eines Fixierrings 13, der vorliegend als Überwurfmutter ausgebildet ist, mit dem Gehäuse 3 verschraubt, wobei ein Außengewinde 15 der Überwurfmutter 13 in ein korrespondierend ausgebildetes Innengewinde 16 des Gehäuses 3 eingreift. Mittels der Überwurfmutter 13, die den Prozessanschluss 7 bzw. das Ausgleichselement 18 in Radialrichtung R übergreift, in Richtung des Gehäuses 3 gegen eine in dem Gehäuse 3 verlaufende Stufe gespannt und damit unter Vorspannung gehaltert werden.

Im vorliegenden Ausführungsbeispiel sind das Gehäuse 3, die Überwurfmutter 13 sowie der Aufnahmering 20 jeweils aus Edelstahl ausgebildet und die Druckmesszelle 5 und der Prozessanschluss 7 aus Keramik, beispielsweise Aluminiumoxid, gefertigt. Um die unterschiedlichen thermischen Ausdehnungskoeffizienten des Edelstahls einerseits und der Keramik andererseits aneinander anzupassen und dennoch die Vorspannung der Anordnung aus Druckmesszelle 5 und Prozessanschluss 7 in dem Gehäuse 3 aufrechtzuerhalten, ist das Ausgleichselement 18 beispielsweise aus Zink gefertigt und derart dimensioniert, dass bei gleicher Temperatureinwirkung auf die Edelstahlbauteile einerseits und die Keramikbauteile andererseits die unterschiedlichen Längenausdehnungen in Axialrichtung A durch das Ausgleichselement 18 kompensiert werden und dadurch die Vorspannung der Anordnung aus Druckmesszelle 5 und Prozessanschluss 7 in dem Gehäuse 3 aufrechterhalten bleibt.

Das Gehäuse 3 weist ferner eine Radialbohrung 24 auf, die für eine Leckageerkennung dienen kann.

Anstelle einer Überwurfmutter 13 kann die Anordnung aus Druckmesszelle 5 und Prozessanschluss 7 auch über andere geeignete Verbindungstechniken, beispielsweise ein Verschweißen, ein geeignetes Umformen, beispielsweise Verstemmen, oder einen Aufschrumpfprozess zwischen Fixierring 13 und Gehäuse 3 verbunden werden.

Wichtig für die Stabilität der Verbindung 6 zwischen Druckmesszelle 5 und Prozessanschluss 7 ist dabei, dass die Anordnung aus Druckmesszelle 5 und Prozessanschluss 7 unter Vorspannung in dem Gehäuse 3 gehaltert ist, da auf diese Weise in Axialrichtung A wirkende durch das Messmedium induzierte Druckkräfte durch die Stützanordnung 9 gut kompensiert werden können.

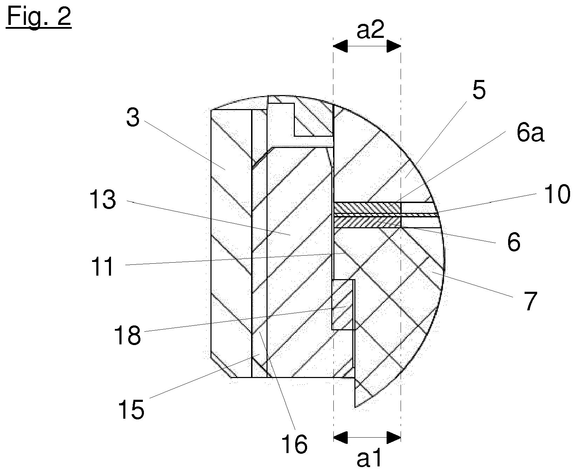

Figur 2 zeigt eine Ausschnittsvergrößerung aus Figur 1, wobei in der in Figur 2 dargestellten Ansicht die Verbindung 6 in Form einer Glaslotfügung zwischen Druckmesszelle 5 und Prozessanschluss 7 im Randbereich, d. h. insbesondere im Bereich des Kragens 11 dargestellt ist. In Figur 2 ist außerdem die Ausgestaltung der Verbindung 6 zwischen der Messmembran 10 und dem Prozessanschluss 7 deutlich zu erkennen. Die Verbindung 6 weist eine erste Ausdehnung a1 auf, die im vorliegenden Beispiel einer zweiten Ausdehnung a2 einer zweiten Verbindung 6a der Messmembran 10 mit einem Grundkörper der Druckmesszelle 5 entspricht. Aus der gezeigten Ansicht ist ferner zu erkennen, dass das Ausgleichselement 18, der in Prozessanschluss 7 im Bereich des Kragens 11 hintergreift und wie aus Figur 1 ersichtlich ist, selbst von der Überwurfmutter 13 hintergriffen wird, so dass eine Vorspannung in Richtung Gehäuse 3 ermöglicht ist. Es sei an dieser Stelle darauf hingewiesen, dass die Verwendung von metallischen Werkstoffen mit einem zur Keramik ähnlichen Temperaturausdehnungskoeffizienten grundsätzlich vorteilhaft ist. Beispielhafte Materialien sind Titan und VACON. Da diese Werkstoffe jedoch im Vergleich zu Edelstahl sehr teuer sind, kann durch die Anordnung des Ausgleichselements 18 zwischen den keramischen und metallischen Bauelementen eine Kompensation der thermischen Ausdehnungskoeffizienten bzw. der thermisch induzierten Ausdehnungen in Axialrichtung A erreicht und damit eine kostengünstige Variante geschaffen werden.

Durch die Stützkonstruktion 9 kann ferner erreicht werden, dass im Fall einer Schädigung der Verbindung 6 zwischen Druckmesszelle 5 und Prozessanschluss 7 nur geringe Mengen des zu messenden Mediums an die Umgebung abgegeben werden, da verhindert wird, dass die Druckmesszelle 5 von dem Prozessanschluss 7 abgesprengt wird.

Zur Leckagedetektion kann im Bereich der Radialbohrung 24 ein Indikator oder ein entsprechender Sensor angebracht werden, welcher Leckagen über einem gewissen Grenzwert kenntlich macht.

### Bezugszeichenliste

- 1: Druckmessanordnung
- 3: Gehäuse
- 5: Druckmesszelle
- 6: Verbindung
- 6a: zweite Verbindung
- 7: Prozessanschluss
- 9: Stützanordnung
- 11: Kragen
- 13: Fixierring/Überwurfmutter
- 15: Außengewinde
- 16: Innengewinde
- 18: Ausgleichselement
- 20: Aufnahmering
- 22: Umwandlungselektronik
- 24: Radialbohrung
- 26: Verschlussleiterplatte

- A: Axialrichtung
- R: Radialrichtung
- a1: erste Ausdehnung
- a2: zweite Ausdehnung

## Patentansprüche

1. Druckmessanordnung (1) mit einer keramischen Druckmesszelle (5) und einem in Axialrichtung (A) und zum Prozess hin angeordneten keramischen Prozessanschluss (7), wobei die Druckmesszelle (5) mit dem Prozessanschluss (7) eine stoffschlüssige Verbindung (6) aufweist,
**dadurch gekennzeichnet, dass**
die Druckmesszelle (5) in einem Gehäuse (3) angeordnet ist, wobei die Druckmessanordnung (1) eine Stützanordnung (9) aufweist, die derart ausgebildet ist, dass sie wenigstens in Axialrichtung (A) wirkende, durch das Messmedium induzierte Druckkräfte auf die Verbindung (6) zwischen Druckmesszelle (5) und Prozessanschluss (7) aufnimmt, wobei die Stützanordnung einen Fixierring (13) aufweist, der den Prozessanschluss (7) in Radialrichtung (R) übergreift und mit dem Gehäuse (3) kraftschlüssig verbunden ist, wobei eine Anordnung aus der Druckmesszelle (5) und dem Prozessanschluss (7) in Richtung des Gehäuses (3) gegen eine in dem Gehäuse (3) verlaufende Stufe gespannt und damit unter Vorspannung gehaltert werden.

2. Druckmessanordnung (1) nach Anspruch 1,
**dadurch gekennzeichnet, dass**
die Verbindung (6) aus einem Glaslot hergestellt ist.

3. Druckmessanordnung (1) nach Anspruch 1,
**dadurch gekennzeichnet, dass**
die Verbindung (6) mittels einer Glasfritte hergestellt ist.

4. Druckmessanordnung (1) nach einem der vorhergehenden Ansprüche,
**dadurch gekennzeichnet, dass**
der Prozessanschluss (7) vorderseitig an einer Messmembran der Druckmesszelle (5) angeordnet ist.

5. Druckmessanordnung (1) nach einem der vorhergehenden Ansprüche,
**dadurch gekennzeichnet, dass**
der Prozessanschluss (7) an einem druckmesszellenseitigen Ende in Radialrichtung (R) einen umlaufenden Kragen (11) aufweist.

6. Druckmessanordnung (1) gemäß einem der vorherigen Ansprüche,
**dadurch gekennzeichnet, dass**
der Fixierring (13) als Überwurfmutter ausgebildet ist, die mit dem Gehäuse (3) verschraubt ist.

7. Druckmessanordnung (1) gemäß Anspruch 6,
**dadurch gekennzeichnet, dass**
die Überwurfmutter ein Außengewinde (15) aufweist, das in ein korrespondierend ausgebildetes Innengewinde (16) des Gehäuses (3) eingreift.

8. Druckmessanordnung (1) gemäß einem der vorherigen Ansprüche,
**dadurch gekennzeichnet, dass**
zwischen dem Fixierring (13) und dem Prozessanschluss (7) ein Ausgleichselement (18) angeordnet ist.

9. Druckmessanordnung (1) gemäß Anspruch 8, **dadurch gekennzeichnet, dass**
das Ausgleichselement (18) geeignet dimensioniert ist und einen thermischen Ausdehnungskoeffizienten aufweist, der derart an einem thermischen Ausdehnungskoeffizienten der Stützanordnung (9) und/oder des Gehäuses (3) und der Druckmesszelle (5) angepasst ist, dass zumindest unterschiedliche thermisch induzierte Ausdehnungen in Axialrichtung (A) kompensiert werden.

10. Druckmessanordnung (1) gemäß einem der vorhergehenden Ansprüche,
**dadurch gekennzeichnet, dass**
in dem Gehäuse (3) ein bevorzugt metallischer Aufnahmering (20) angeordnet ist, der die Druckmesszelle (5) in rückseitiger Richtung abstützt.

11. Druckmessanordnung (1) gemäß einem der vorhergehenden Ansprüche,
**dadurch gekennzeichnet, dass**
die Verbindung (6) zwischen der Druckmesszelle (5) und dem Prozessanschluss (7) in Radialrichtung (R) eine erste Ausdehnung (a1) aufweist, die kleiner oder gleich einer zweiten Ausdehnung (a2) einer zweiten Verbindung (6a) zwischen einem Grundkörper der Druckmesszelle (5) und der Messmembran ist.

12. Verfahren zur Herstellung einer Druckmessanordnung (1) gemäß einem der vorhergehenden Ansprüche, mit den Schritten:
- Bereitstellen einer keramischen Druckmesszelle (5),
- Bereitstellen eines rohrförmig ausgebildeten keramischen Prozessanschlusses (7),
- stoffschlüssiges Verbinden der Druckmesszelle (5) und des Prozessanschlusses (7)
- Anordnen der Druckmesszelle (5) in einem Gehäuse (3).

13. Verfahren nach Anspruch 12, **gekennzeichnet durch** das Anbringen einer Stützeinrichtung (9) derart, dass wenigstens in Axialrichtung (A) wirkende, durch das Messmedium induzierte Druckkräfte zwischen Druckmesszelle (5) und Prozessanschluss (7) von der Stützeinrichtung (9) aufgenommen werden.

14. Verfahren gemäß einem der Ansprüche 12 oder 13, **dadurch gekennzeichnet, dass** der Prozessanschluss (7) mittels eines Keramikspritzgussverfahrens hergestellt wird.

## Claims

1. Pressure measuring arrangement (1) comprising a ceramic pressure measuring cell (5) and a ceramic process connection (7) which is arranged in the axial direction (A) and is intended for processing, wherein the pressure measuring cell (5) has a substance-to-substance bonded connection (6) to the process connection (7), **characterised in that** the pressure measuring cell (5) is arranged in a housing (3), wherein the pressure measuring arrangement (1) has a supporting arrangement (9) which is designed in such a way that it absorbs at least pressure forces induced by the measuring medium and acting in the axial direction (A) on the connection (6) between the pressure measuring cell (5) and the process connection (7), wherein the supporting arrangement has a fixing ring (13) which extends over the process connection (7) in the radial direction (R) and is connected to the housing (3) by force fitting, wherein an arrangement consisting of the pressure measuring cell (5) and the process connection (7) is gripped against a step extending in the direction of the housing (3) and thus is held under pretension.

2. Pressure measuring arrangement (1) according to claim 1, **characterised in that** the connection (6) is produced from a glass solder.

3. Pressure measuring arrangement (1) according to claim 1, **characterised in that** the connection (6) is produced by means of a glass frit.

4. Pressure measuring arrangement (1) according to one of the preceding claims, **characterised in that** the process connection (7) is arranged at the front on a measuring membrane of the pressure measuring cell (5).

5. Pressure measuring arrangement (1) according to one of the preceding claims, **characterised in that** in the radial direction (R) the process connection (7) has a peripheral collar (11) at an end nearest to the pressure measuring cell.

6. Pressure measuring arrangement (1) according to one of the preceding claims, **characterised in that** the fixing ring (13) is formed as a union nut which is screwed to the housing (3).

7. Pressure measuring arrangement (1) according to claim 6, **characterised in that** the union nut has an external thread (15) which engages in a corresponding internal thread (16) of the housing (3).

8. Pressure measuring arrangement (1) according to one of the preceding claims, **characterised in that** a compensating element (18) is arranged between the fixing ring (13) and the process connection (7).

9. Pressure measuring arrangement (1) according to claim 8, **characterised in that** the compensating element (18) is suitably dimensioned and has a coefficient of thermal expansion which is adapted to a coefficient of the supporting arrangement (9) and/or the housing (3) and the pressure measuring cell (5) in such a way that it is possible at least to compensate for different thermally induced expansions in the axial direction (A).

10. Pressure measuring arrangement (1) according to one of the preceding claims, **characterised in that** a preferably metallic receiving ring (20), which supports the pressure measuring cell (5) in the rearward direction, is arranged in the housing (3).

11. Pressure measuring arrangement (1) according to any one of the preceding claims, **characterised in that** the connection (6) between the pressure measuring cell (5) and the process connection (7) in the radial direction (R) has a first dimension (a1) which is smaller than or equal to a second dimension (a2) of a second connection (6a) between a main body of the pressure measuring cell (5) and the measuring membrane.

12. Method for producing a pressure measuring arrangement (1) according to one of the preceding claims, comprising the steps of:
- providing a ceramic pressure measuring cell (5),
- providing a tubular ceramic process connection (7),
- joining the pressure measuring cell (5) and the process connection (7) by substance-to-substance bonding,
- arranging the pressure measurement cell (5) in a housing (3).

13. Method according to claim 12, **characterised by** the attachment of a supporting device (9) in such a way that at least pressure forces induced by the measuring medium and acting in the axial direction (A) between the pressure measuring cell (5) and the process connection (7) are absorbed by the supporting device (9).

14. Method according to one of claims 12 or 13, **characterised in that** the process connection (7) is produced by means of a ceramic injection moulding method.

## Revendications

1. Dispositif de mesure de pression (1) comprenant une cellule de mesure de pression céramique (5) ainsi qu'un raccord de processus céramique (7) monté en direction axiale (A) vers le processus, la cellule de mesure de pression (5) étant reliée au raccord de processus (7) par une liaison par la matière (6),
**caractérisé en ce que**
la cellule de mesure de pression (5) est montée dans un boîtier (3), le dispositif de mesure de pression (1) comprenant un dispositif de support (9) qui est réalisé de sorte qu'il recueille les efforts de pression agissant sur la liaison (6) entre la cellule de mesure de pression (5) et le raccord de processus (7) induits par le fluide de mesure agissant au moins dans la direction axiale (A), le dispositif de support comprenant au moins une bague de fixation (13) qui vient en prise sur le raccord de processus (7) en direction radiale (R) et est reliée par une liaison par la force avec le boîtier (3), l'ensemble constitué par la cellule de mesure de pression (5) et le raccord de processus (7) étant serré, dans la direction du boîtier (3) contre un gradin s'étendant dans le boîtier (3), et étant ainsi maintenu sous précontrainte.

2. Dispositif de mesure de pression (1) conforme à la revendication 1,
**caractérisé en ce que**
la liaison (6) est réalisée à partir d'une brasure vitreuse.

3. Dispositif de mesure de pression (1) conforme à la revendication 1,
**caractérisé en ce que**
la liaison (6) est réalisée à partir d'un verre de frittage.

4. Dispositif de mesure de pression (1) conforme à l'une des revendications précédentes,
**caractérisé en ce que**
le raccord de processus (7) est monté côté avant sur une membrane de mesure de la cellule de mesure de pression (5).

5. Dispositif de mesure de pression (1) conforme à l'une des revendications précédentes,
**caractérisé en ce que**
le raccord de processus (7) comporte, une collerette périphérique (11) à son extrémité située du côté de la cellule de mesure de pression dans la direction radiale (R).

6. Dispositif de mesure de pression (1) conforme à l'une des revendications précédentes,
**caractérisé en ce que**
la bague de fixation (13) est réalisée sous la forme d'un écrou d'accouplement qui est vissé sur le boîtier (3).

7. Dispositif de mesure de pression (1) conforme à la revendication 6,
**caractérisé en ce que**
l'écrou d'accouplement comporte un filetage externe (15) qui vient en prise dans un filetage interne (16) du boîtier (3) réalisé de façon correspondante.

8. Dispositif de mesure de pression (1) conforme à l'une des revendications précédentes,
**caractérisé en ce qu'**
un élément d'équilibrage (18) est monté entre la bague de fixation (13) et le raccord de processus (7).

9. Dispositif de mesure de pression (1) conforme à la revendication 8,
**caractérisé en ce que**
l'élément d'équilibrage (18) est dimensionné de manière adaptée et a un coefficient de dilatation thermique qui est adapté au coefficient de dilatation thermique du dispositif de support (9) et/ou du boîtier (3) et de la cellule de mesure de pression (5) de sorte qu'au moins des dilatations thermiquement induites différentes dans la direction axiale (A) soient compensées.

10. Dispositif de mesure de pression (1) conforme à l'une des revendications précédentes,
**caractérisé en ce que**
dans le boîtier (3) est montée une bague de réception (20) de préférence métallique qui supporte la cellule de mesure de pression dans la direction arrière.

11. Dispositif de mesure de pression (1) conforme à l'une des revendications précédentes,
**caractérisé en ce que**
la liaison (6) entre la cellule de mesure de pression (5) et le raccord de processus (7) à direction radiale (R) une première extension (a1) qui est inférieure ou égale à une seconde extension (a2) d'une seconde liaison (6a) entre un corps de base de la cellule de mesure de pression (5) et la membrane de mesure.

12. Procédé d'obtention d'un dispositif de mesure de pression (1) conforme à l'une des revendications précédentes, comprenant des étapes consistant à :
- se procurer une cellule de mesure de pression céramique (5),
- se procurer un raccord de processus céramique (7) réalisé sous la forme d'un tube,
- relier par une liaison par la matière, la cellule de mesure de la pression (5) et le raccord de processus (7),
- monter la cellule de mesure de pression (5) dans un boîtier (3).

13. Procédé conforme à la revendication 12,
**caractérisé par**
la mise en place d'un dispositif de support (9) de sorte que les efforts de pression entre la cellule de mesure de pression (5) et le raccord de processus (7) induits par le fluide de mesure, agissant au moins dans la direction radiale (A) soient recueillis par le dispositif de support (9).

14. Procédé conforme à l'une des revendications 12 et 13,
**caractérisé en ce que**
le raccord de processus (7) est réalisé par un procédé de moulage par injection d'une céramique.
